# EUROPEAN PATENT APPLICATION

(11) **EP 1 313 049 A2**
(43) Date of publication of application: **21.05.2003**
(21) Application number: 02025699.6
(22) Date of filing: 20.11.2002
(51) Int. Cl.: G06F 17/60

(54) **A device having negotiation functions and agreement formation system**

(30) Priority: 20.11.2001 JP 2001354805; 03.09.2002 JP 2002257530
(71) Applicant: MATSUSHITA ELECTRIC INDUSTRIAL CO., LTD., Kadoma-shi, Osaka 571-8501 (JP)
(72) Inventor: Kageyama, Mitsuhiro, Tokyo 190-0032 (JP); Sato, Mitsuhiro, Kanagawa 243-0216 (JP); Uranaka, Sachiko, Tokyo 113-0021 (JP); Okamura, Kazuo, Kanagawa 213-0013 (JP)
(74) Representative: Grünecker, Kinkeldey, Stockmair & Schwanhäusser Anwaltssozietät

(57) **Abstract**

An object of the present invention is to provide a device capable of negotiation about the disclosure of attribute information. According to the present invention, a terminal is provided with: a personal attribute information creation and management part that stores and manages users' attribute information; and an input-output management part that controls the output of users' attribute information to external devices and the input of others' attribute information from external devices. The center device comprises: a contents management part that manages contents; a server part that implements services; a service attribute information creation and management part that manages attribute information about contents and services; and an input-output management part that controls the output of attribute information of services and contents to external devices, and the input of users' attribute information inputted from other devices. With this construction, the input-output management part of the terminal and the input-output management part of the center device perform negotiation with each other to automatically decide a range of attribute information to be disclosed.

## Description

### BACKGROUND OF THE INVENTION

### Field of the Invention

The present invention relates to a system that forms an agreement by negotiation with a center device and terminals capable of negotiation, and computer programs for achieving their functions, and enables negotiation about the particularly attribute information and contents.

### Description of Prior Art

Recently, the Internet has become remarkably widespread to such an extent that persons having similar preferences form a community over a network to write an e-mail, participate in an electronic bulletin board, and exchange their opinions through chat systems, and products and contents are sold and purchased by electronic commerce (hereinafter referred to as EC) over a network.

Contents distribution services by servers are also spreading. The distribution services are classified as PULL type services and "PUSH" type services: with the former, users request contents from the servers, and with the latter, the servers send contents to user terminals as required.

By peer-to-peer file exchange, contents such as music and images are exchanged over the Internet on an individual-to-individual basis without servers' involvement.

When using the EC and the contents distribution services or joining communities, users are requested to disclose personal information. With the EC, service agencies may request users to gain membership in EC services to disclose information such as their age, sex, family structure, hobbies, and preferences, in addition to information such as their name, address, telephone number which are indispensable to the delivery of commodities.

The service agencies store such personal information and shipping history information in a customer database, execute CRM (Customer Relationship Management), apply techniques such as data mining to collected data to analyze well-selling commodities and customers' preferences, and increase customers' satisfaction, thereby achieving an increase in profits.

Personal information is of extremely great value to parties who collect it for use. On the other hand, users to disclose their personal information are anxious that disclosed personal information may be known to unknown persons or used unreasonably. For this reason, the users tend to refrain from disclosing their personal information.

In present EC services, users unconditionally disclose their address and name which are indispensable to getting commodities, but often refrain from telling their family structure, hobbies, preferences, etc. If incentives such as, e.g., payment of an information offer fee are awarded for the disclosure of personal information, the number of users replying to the disclosure of personal information is expected to increase. In this case, the range of personal information disclosure permitted by the users is expected to extend according to the amounts of the fee.

Smooth exchange of valuable information over a network requires that both of a party to disclose the information and a party to use it admit the value of the information and exchange the information in a mutually agreeable form. The same is also true for personal information. This is also true for not only personal information (person's attribute information) but also contents attribute information, service attribute information, and the like.

However, present systems do not have a negotiation means by which a party to obtain attribute information and a party to disclose the attribute information decide conditions for disclosing the attribute information by matching mutual requests.

For this reason, the party to use attribute information has difficulty in obtaining excellent attribute information rich in information value, while the party holding attribute information cannot take full advantage of the value of the attribute information.

Likewise, the act of matching mutual requests is required also in the following cases: self-made contents are offered on a peer-to-peer basis; contents offered by PUSH type distribution services are received; and, for example, an operation command to make a reservation for storing contents is accepted by a terminal by the service of operating the terminal over a network.

There may be cases where self-made contents may be offered to persons having similar hobbies and cannot be offered otherwise, and they may be offered if a reward is awarded. There may be cases where contents to be distributed may be received if the attributes of the contents match user's preferences, and they may be received if they are ones from a reliable distribution agency. With the service of operating terminals, a procedure for checking a sender of an operation command and operation contents must be taken to accept the operation command only when conditions are satisfied.

Thus, acts such as transactions over a network, the disclosure of information and contents, and the offering of services can be performed smoothly and effectively by matching mutual conditions and forming an agreement. However, no present systems have a means for automatically performing such negotiation.

### SUMMARY OF THE INVENTION

In an agreement formation system of the present invention, a first device is provided with an attribute information creation and management part that stores and manages attribute information, an attribute information disclosure condition management part that sets and manages disclosure conditions for the disclosure destination of the attribute information, and a first negotiation part that performs negotiation with the disclosure destination on the attribute information according to the disclosure conditions, and a second device is provided with an attribute information receive condition management part that sets and manages receive conditions for receiving attribute information from the disclosure source of the attribute information, and a second negotiation part that performs negotiation with the disclosure source on the disclosure of attribute information according to the receive conditions, wherein an agreement on conditions for disclosing attribute information is formed between the first negotiation part of the first device and the second negotiation part of the second device, the first device transmits attribute information of a disclosure range agreed by the first negotiation part to the second device, and the second device receives the attribute information under a condition agreed by the second negotiation part.

By this configuration, negotiation processing for disclosing attribute information is automatically performed between the devices.

A first device is provided with a contents management part that stores and manages contents, a contents disclosure condition management part that sets and manages disclosure conditions for the disclosure destination of the contents, and a first negotiation part that performs negotiation with the disclosure destination on the disclosure of the contents according to the disclosure conditions, and a second device is provided with a receive contents management part that stores and manages received contents, a contents receive condition management part that sets and manages receive conditions for receiving contents from the disclosure source of the contents, and a second negotiation part that performs negotiation with the disclosure source on the disclosure of contents according to the receive conditions, wherein an agreement on conditions for disclosing contents is formed between the first negotiation part of the first device and the second negotiation part of the second device, the first device transmits contents of a disclosure range agreed by the first negotiation part to the second device, and the second device receives the contents under a condition agreed by the second negotiation part, and stores and manages the contents.

By this configuration, negotiation on a disclosure range of contents can be automatically performed.

A first device is provided with a terminal operation control part that controls the functions of the device according to a received terminal operation command, and a first negotiation part that performs negotiation with the transmitting source of the terminal operation command on whether to receive the terminal operation command, and a second device is provided with a terminal operation command creation part that creates the terminal operation command, and a second negotiation part that performs negotiation with the transmitting destination of the terminal operation command on whether to transmit the terminal operation command, wherein an agreement on the acceptance of the terminal operation command is formed between the first negotiation part of the first device and the second negotiation part of the second device, the second device transmits the terminal operation command agreed by the second negotiation part to the first device, the first device receives the terminal operation command agreed to accept by the first negotiation part and transfers it to the terminal operation control part, and the terminal operation control part controls the functions of the device according to the terminal operation command.

By this configuration, negotiation on the acceptance of the terminal operation command can be automatically performed.

A device of the present invention is provided with an attribute information creation and management part that stores and manages attribute information, a disclosure condition management part that sets and manages disclosure conditions for the disclosure destination of the attribute information, a first negotiation part that forms an agreement with the disclosure destination of the attribute information on conditions for disclosing the attribute information according to the disclosure conditions and decides a disclosure range of the attribute information, and an attribute information filter part that, when transmitting the attribute information to the disclosure destination, modifies the attribute information so as to output it only in a disclosure range decided by the first negotiation part.

By this configuration, negotiation on attribute information to be disclosed can be performed.

A device of the present invention is provided with a receive condition management part that sets and manages receive conditions for receiving attribute information from the disclosure source of attribute information, and a second negotiation part that forms an agreement on conditions for disclosing the attribute information with the disclosure source of the attribute information according to the receive conditions, and receives the attribute information from the disclosure source, based on the agreed conditions.

By this configuration, negotiation on attribute information to be obtained can be performed.

A device of the present invention is provided with an attribute information creation and management part that stores and manages attribute information, a disclosure condition management part that sets and manages disclosure conditions for the disclosure destination of the attribute information, a receive condition management part that sets and manages receive conditions for receiving attribute information from the disclosure source of the attribute information, a contents management part that stores and manages contents, a contents disclosure condition management part that sets and manages disclosure conditions for the disclosure destination of the contents, a first negotiation part that performs negotiation with the disclosure destination of contents according to the disclosure conditions of the contents and the disclosure conditions and receive conditions of the attribute information, and decides a disclosure range of the contents to be disclosed, and an output contents filter part that, when disclosing the contents, modifies the contents so as to output it only in a disclosure range decided by the first negotiation part.

By this configuration, negotiation on contents to be presented can be performed in connection with the disclosure of attribute information.

A device of the present invention is provided with an attribute information creation and management part that stores and manages attribute information, a disclosure condition management part that sets and manages disclosure conditions for the disclosure destination of the attribute information, a receive condition management part that sets and manages receive conditions for receiving attribute information from the disclosure source of the attribute information, a receive contents management part that stores and manages receive contents, a contents receive condition management part that sets and manages receive conditions for receiving contents from the disclosure source of the contents, and a negotiation part that performs negotiation with the disclosure source of contents according to the receive conditions of the contents and the disclosure conditions and receive conditions of the attribute information, and decides a disclosure range of the contents to be disclosed.

By this configuration, negotiation on contents to be presented can be performed in connection with the disclosure of attribute information.

A device of the present invention is provided with a terminal operation control part that controls the functions of the device according to a received terminal operation command, a first negotiation part that performs negotiation with the transmitting source of the terminal operation command on whether to receive the terminal operation command, and a filter part that, when receiving the terminal operation command agreed to accept by the first negotiation part, selects the terminal operation command and transfers it to the terminal operation control part.

By this configuration, negotiation is performed on the acceptance of a terminal operation command, and the terminal operation command can be received after confirming the transmitting source and contents of the terminal operation command.

A computer program of the present invention instructs a computer to execute the steps of: forming an agreement on conditions for disclosing attribute information with other devices according to disclosure conditions set regarding the attribute information; and forming an agreement on conditions for disclosing the attribute information with the other devices according to receive conditions set regarding the attribute information.

The program instructs the computer to execute the steps of: forming an agreement on conditions for disclosing contents with other devices according to disclosure conditions set regarding the contents; and forming an agreement on conditions for disclosing the contents with the other devices according to receive conditions set regarding the contents.

By this configuration, computers of the terminal device and center device can be instructed to perform negotiation operations for disclosing attribute information and contents.

An object of the present invention is to solve the above described problems, and to provide a system that performs negotiation on the disclosure of attribute information and contents or the offering of services to form an agreement on a disclosure range and presentation conditions, and to provide devices for executing the system and computer programs designed for the devices.

The above described objects and advantages of the present invention will be become more apparent from embodiments described below with reference to the drawings.

### BRIEF DESCRIPTION OF THE DRAWINGS

Preferred embodiments of the present invention will be described in detail based on the followings, wherein:
FIG. 1 shows a system configuration in a first embodiment of the present invention;
FIG. 2 shows a configuration of a user terminal in the first embodiment of the present invention;
FIG. 3 shows a configuration of a center device in the first embodiment of the present invention;
FIG. 4 shows an example of attribute information disclosure conditions in the first embodiment of the present invention;
FIG. 5 shows an example of attribute information receive conditions in the first embodiment of the present invention;
FIG. 6 shows a first sequence for exchanging attribute information in the first embodiment of the present invention;
FIG. 7 shows a second sequence for exchanging attribute information in the first embodiment of the present invention;
FIG. 8 shows a second disclosure conditions of attribute information in the first embodiment of the present invention;
FIG. 9 shows a third sequence for exchanging attribute information in the first embodiment of the present invention;
FIG. 10 shows a system configuration in a second embodiment of the present invention;
FIG. 11 shows a configuration of a user terminal in the second embodiment of the present invention;
FIG. 12 shows a configuration of a center device in the second embodiment of the present invention;
FIG. 13 shows personal contents disclosure conditions in the second embodiment of the present invention;
FIG. 14 shows contents receive conditions in the second embodiment of the present invention;
FIG. 15 shows a sequence of disclosing and receiving PULL type contents in the second embodiment of the present invention;
FIG. 16 shows a sequence of disclosing and receiving PUSH type contents in the second embodiment of the present invention; and
FIG. 17 shows an example of attribute information in the first embodiment of the present invention.

### DESCRIPTION OF THE PREFERRED EMBODIMENTS

### (First embodiment)

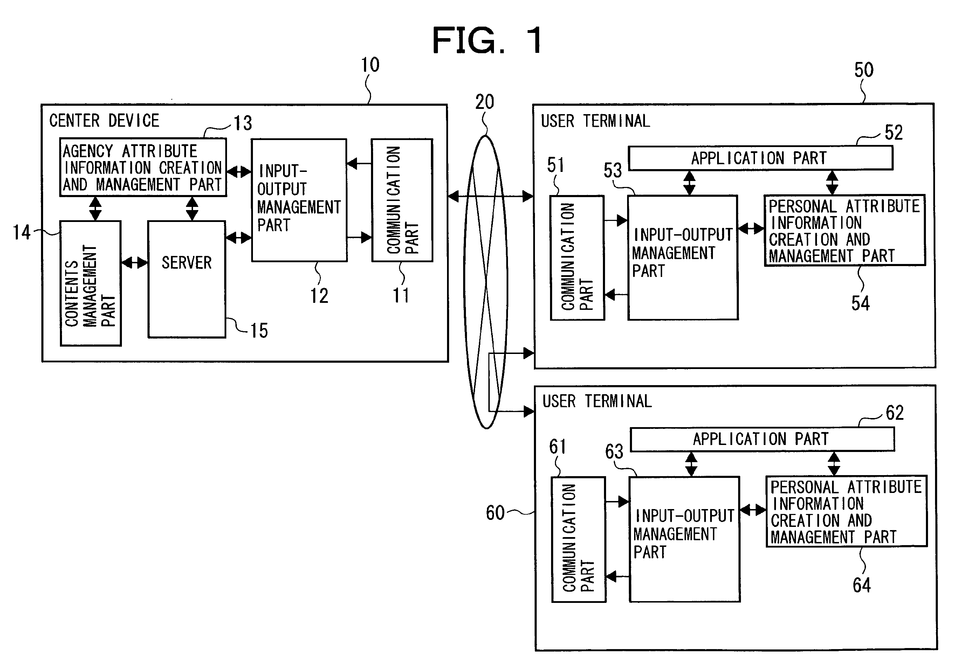

An attribute information agreement formation system of the first embodiment of the present invention, as shown in FIG. 1, comprises: a center device 10 having negotiation functions for attribute information; user terminals 50 and 60 having negotiation functions for attribute information; and a network 20 for making connections between the center device 10 and the user terminals 50 and 60, and between the user terminals 50 and 60. The user terminals 50 and 60 are a set-top box (STB) connected to a TV set, personal computer, cellular phone, personal digital assistance (PDA), car navigation system, and the like, that exchange information by means of CATV, the Internet, digital broadcasting, wireless communications, and the like.

The user terminal 50 comprises: a communication part 51 that performs communications through the network 20; an application part 52 that executes applications such as browsers and authoring; a personal attribute information creation and management part 54 that stores and manages users' attribute information; and an input-output management part 53 that controls the output of users' attribute information to the external center device 10 or terminal 60 and the input of others' attribute information from the external center device 10 or the terminal 60. The user terminal 60 also has the same configuration.

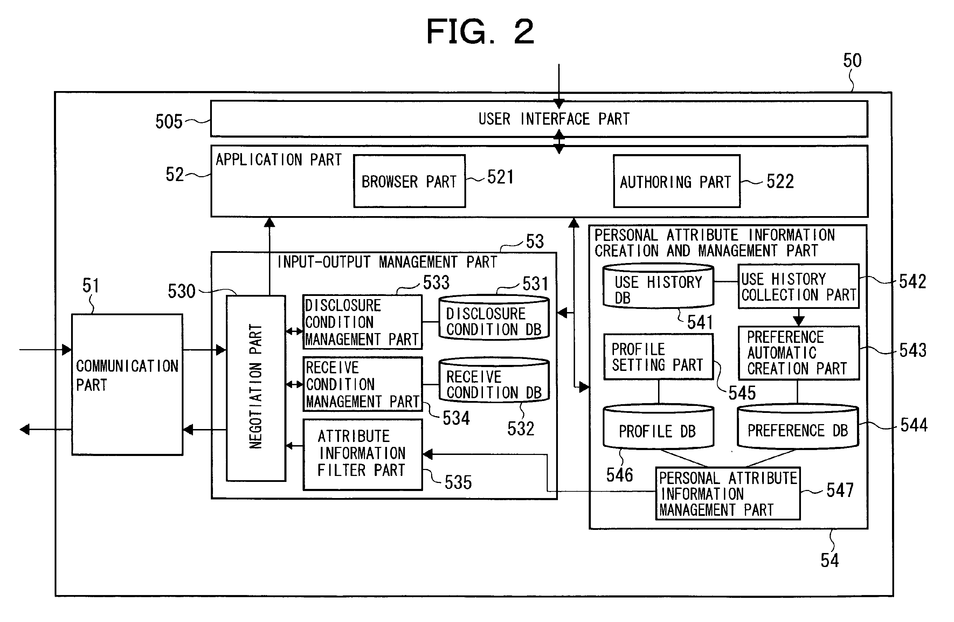

FIG. 2 shows more detailed configuration of the user terminal 50. The application part 52 comprises a browser part 521 that reads HTML documents or the like received over the Internet and data broadcasting and renders contents described therein, and an authoring part 522 that edits sounds, moving pictures, still pictures, character data, and the like to produce contents. The browser part 521 and the authoring part 522 receive user-inputted commands through the user interface part 505.

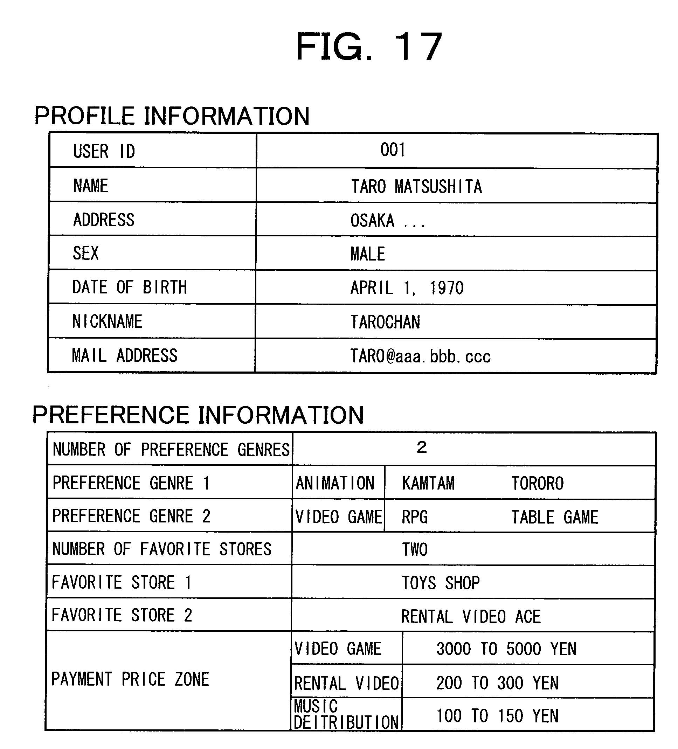

Users' attribute information stored and managed by the personal attribute information creation and management part 54, as shown in FIG. 17, comprises user-identifying profile information and preference information indicative of user's preference. The profile information contains an address, name, sex, birth date, and the like, and the preference information contains information such as hobbies, preferences, favorite contents genres, favorite agencies (EC sites often used), and favorite users (persons with whom information is often exchanged). The personal attribute information creation and management part 54 comprises: a use history DB 541 that stores use history information such as a broadcast program watching history, home page reference history, EC use results, and mail transmission/reception results in the user terminal 50; a use history collecting part 542 that collects use history information from the use history DB 541; a preference automatic creation part 543 that analyzes preference from the collected use history information to create preference information; a preference DB 544 that stores created preference information; a profile setting part 545 that registers profile information; a profile DB 546 that stores the profile information; and a personal attribute information management part 547 that manages the profile information combined with the preference information as attribute information, and outputs the attribute information in response to external requests.

The input-output management part 53 comprises: a disclosure condition management part 533 that sets and manages disclosure conditions for attribute information transmitted to an attribute information disclosure requester; a disclosure condition DB 531 that stores the set disclosure conditions; a receive condition management part 534 that sets and manages receive conditions for receiving attribute information from an attribute information disclosure requestee; a receive condition DB 532 that stores the set receive conditions; a negotiation part 530 that, when disclosing attribute information, negotiates with an attribute information disclosure requester according to disclosure conditions to decide the range of disclosing the attribute information, and when receiving attribute information, negotiates with an attribute information disclosure requestee according to receive conditions to receive the attribute information from the attribute information disclosure requestee; and an attribute information filter part 535 that modifies attribute information so as to output it only in a disclosure range decided by the negotiation part 530.

The functions of the parts of the user terminals are implemented by having computers included in the user terminals perform program-defined processing.

The center device 10 comprises: a communication part 11 that performs communications through the network 20; a contents management part 14 that manages contents; a server part 15 that implements services such as EC and contents distribution; an agency attribute information creation and management part 13 that manages attribute information about contents and services; and an input-output management part 12 that controls the output of attribute information of services and contents to the terminals 50 and 60, and the input of users' attribute information inputted from the terminals 50 and 60.

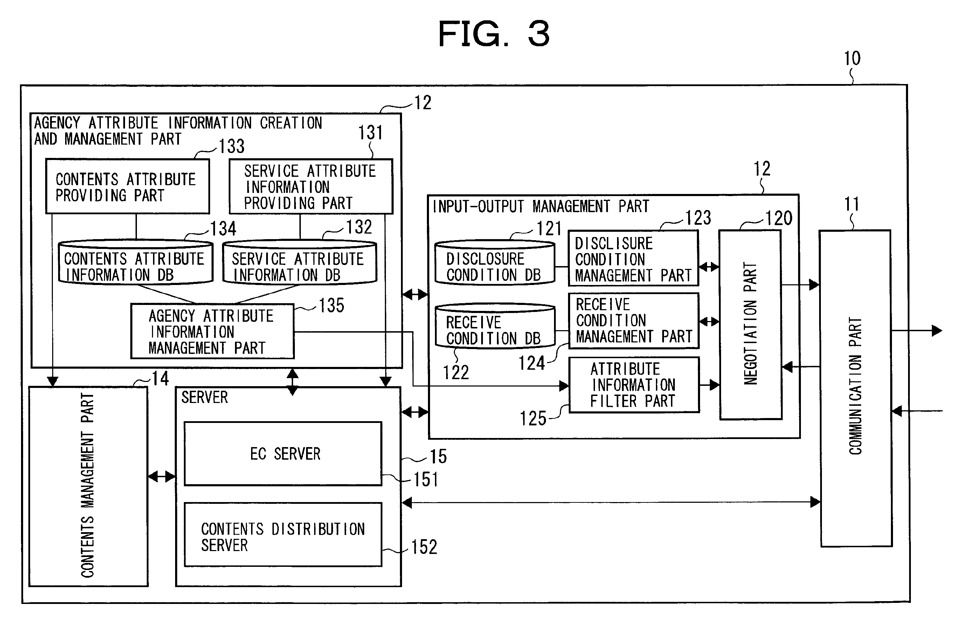

FIG. 3 shows a more detailed configuration of the center device 10. The server part 15 comprises an EC server 151 that executes EC service, and a contents distribution server 152 that executes contents distribution service.

The agency attribute information creation and management part 13 comprises: a contents attribute providing part 133 that provides attribute information to contents managed by the contents management part 14; a contents attribute information DB 134 that stores contents attribute information provided by the contents attribute providing part 133; a service attribute information providing part 131 that provides attribute information to services implemented by the server 15; a service attribute information DB 132 that stores service attribute information provided by the service attribute information providing part 131; and an agency attribute information management part 135 that manages contents attribute information and service attribute information and outputs the attribute information in response to external requests.

The input-output management part 12, like the user terminal 50, comprises: a disclosure condition management part 123 that sets and manages disclosure conditions for attribute information transmitted to an attribute information disclosure requester; a disclosure condition DB 121 that stores the set disclosure conditions; a receive condition management part 124 that sets and manages receive conditions for receiving attribute information from an attribute information disclosure requestee; a receive condition DB 122 that stores the set receive conditions; a negotiation part 120 that, when disclosing attribute information, negotiates with an attribute information disclosure requester according to disclosure conditions to decide the range of disclosing the attribute information, and when receiving attribute information, negotiates with an attribute information disclosure requestee according to receive conditions to receive the attribute information from the attribute information disclosure requestee; and an attribute information filter part 125 that modifies attribute information so as to output it only in a disclosure range decided by the negotiation part 120.

The functions of the parts of the center device are implemented by having computers included in the center device perform program-defined processing.

Disclosure conditions set and managed by the disclosure condition management part 533 of the user terminal 50 and the disclosure condition management part 123 of the center device 10 are as described below.

### (1) Disclosure condition 1

Items of managed attribute information to be disclosed are decided according to the attributes of an attribute information disclosure requester. If the attribute information disclosure requester is a user, application, contents, agency, or the like, items to be disclosed are decided according to the attribute information disclosure requester.

### (2) Disclosure condition 2

Items of managed attribute information to be disclosed are decided according to a disclosure level of attribute information of an attribute information disclosure requester. For example, if the attribute information disclosure requester tells an address and name, this side also discloses its address and name.

### (3) Disclosure condition 3

By comparing the attribute information of an attribute information disclosure requester and managed attribute information, items of the managed attribute information to be disclosed are decided. For example, if comparison between the attribute information of an attribute information disclosure requester and managed attribute information shows that the attribute information disclosure requester has a similar preference, the attribute information is disclosed.

### (4) Disclosure condition 4

According to a reward received from an attribute information disclosure requester, items of the managed attribute information to be disclosed are decided. For example, if money, an incentive, or free contents are offered, the attribute information is disclosed.

### (5) Disclosure condition 5

Predetermined items of managed attribute information are disclosed without negotiation to specific attribute information disclosure requesters. For example, if an attribute information disclosure requester is described in a "friend directory", predetermined items of managed attribute information are disclosed. If it is described in a black list, no attribute information is disclosed.

### (6) Disclosure condition 6

Information disclosure requesters must strictly observe use limitations on disclosed attribute information. For example, if an attribute information disclosure requester agrees with inhibition of transfer without permission, attribute information is disclosed.

### (7) Disclosure condition 7

According to a confidence evaluation for an attribute information disclosure requester by a third party, items of managed attribute information to be disclosed are decided.

### (8) Disclosure condition 8

Items of managed attribute information to be disclosed are decided by combinations of the disclosure conditions 1 to 7.

### (9) Disclosure condition 9

Priority is assigned to conditions combined by the disclosure condition 8 to decide items of managed attribute information to be disclosed, according to the priority.

### (10) Disclosure condition 10

Anecessary condition, sufficient condition, or necessary and sufficient condition is assigned to each of conditions combined by the disclosure condition 8 so that, unless the necessary condition is satisfied, no attribute information is disclosed, and items of managed attribute information to be disclosed are decided according to a degree with which the sufficient condition is satisfied.

Receive conditions set and managed by the receive condition management part 532 of the user terminal 50 and the disclosure condition management part 124 of the center device 10 are as described below.

### (1) Receive condition 1

To receive the attribute information from a party (attribute information disclosure requestee) who was demanded to disclose attribute information, all or part of items of managed attribute information is disclosed to the attribute information disclosure requestee.

### (2) Receive condition 2

To receive the attribute information from an attribute information disclosure requestee who was demanded to disclose attribute information, a reward is passed to the attribute information disclosure requestee. For example, the reward is money, an incentive, or contents.

### (3) Receive condition 3

To receive the attribute information from an attribute information disclosure requestee who was requested to disclose attribute information, use limitations on disclosed attribute information must be observed.

### (4) Receive condition 4

To receive the attribute information from an attribute information disclosure requestee who was requested to disclose attribute information, the receive conditions 1 to 3 are combined.

For example, when the center device 10 receives the user's attribute information from the user terminal 50, an agreement is obtained between the negotiation part 530 of the user terminal 50 and the negotiation part 120 of the center device 10 on conditions for disclosing attribute information so that the negotiation part 530 satisfies disclosure conditions managed by the disclosure condition management part 533, and the negotiation part 120 observes receive conditions managed by the receive condition management part 124. The same is also true for a case where the user terminal 60 receives user's attribute information from the user terminal 50.

Next, a specific example of negotiation is described.

A description is made of a case where the center device 10 of an agency requests the user terminal 50 to disclose the attribute information of the user of the user terminal 50.

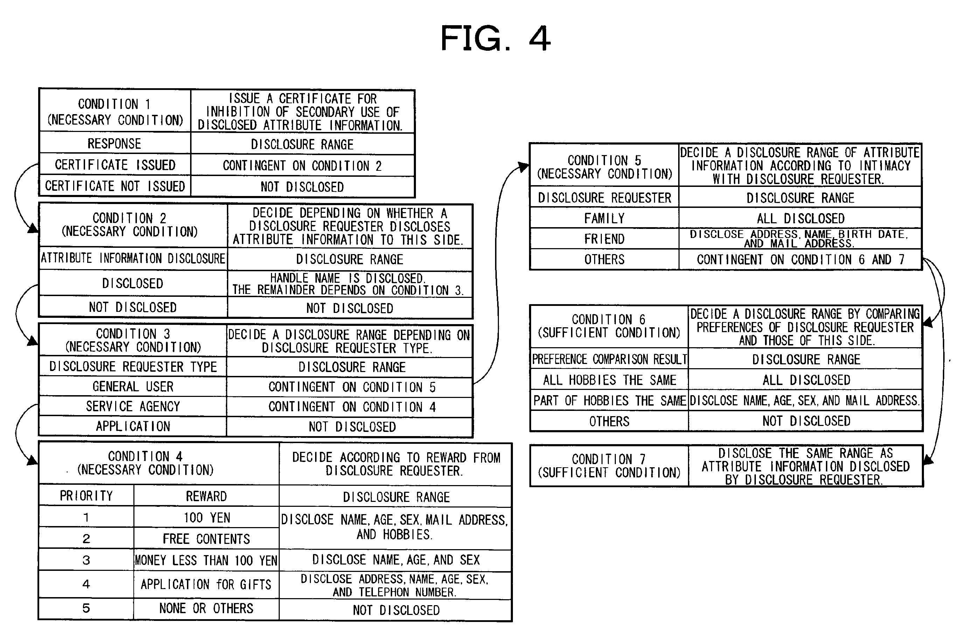

It is assumed that, in the user terminal 50, the disclosure condition management part 533 manages attribute information disclosure conditions shown in FIG. 4. That is,

Disclosure condition 1 (necessary condition): An attribute information disclosure requester issues a certificate for inhibition of secondary use of disclosed attribute information. If the attribute information disclosure requester responds with "certificate issued", a disclosure range is decided according to the next condition 2. If the attribute information disclosure requester responds with "certificate not issued", no attribute information is disclosed.

Disclosure condition 2 (necessary condition): Whether to disclose attribute information to an attribute information disclosure requester is decided depending on whether the attribute information disclosure requester discloses attribute information to this side. If the attribute information disclosure requester discloses attribute information, a handle name is disclosed and the disclosure of remaining attribute information is decided depending on the next condition 3. If the attribute information disclosure requester discloses no attribute information, this attribute information disclosure requestee also discloses no attribute information.

Disclosure condition 3 (necessary condition): A disclosure range of attribute information is decided depending on the type of an attribute information disclosure requester. If an attribute information disclosure requester is a general user, a disclosure range is decided depending on condition 5. If the attribute information disclosure requester is a service agency, a disclosure range is decided depending on condition 4. If the attribute information disclosure requester is an application, no attribute information is disclosed.

Disclosure condition 4 (necessary condition): A disclosure range of attribute information is decided according to a reward from an attribute information disclosure requester. If 100 yen is paid as a reward, or free contents are provided, a name, age, sex, mail address, and hobby are disclosed. If money less than 100 yen is paid, a name, age, and sex are disclosed. If a qualification to apply for gifts is obtained, an address, name, age, sex, and telephone number are disclosed. If a reward is other than the above or no reward is offered, no attribute information is disclosed. Priority is given to the rewards in this order, and when plural conditions are presented from an attribute information disclosure requester, a disclosure range of attribute information is decided according to the priority.

Disclosure condition 5 (sufficient condition): A disclosure range of attribute information is decided according to the degree of intimacy with an attribute information disclosure requester. If an attribute information disclosure requester is a family member, all items of attribute information are disclosed. If an attribute information disclosure requester is a friend, an address, name, birth date, and mail address are disclosed. In other cases, a disclosure range is decided from conditions 6 and 7. Whether an attribute information disclosure requester is a friend is decided from whether the friend is registered in a "friend directory" within a disclosure condition DB.

Disclosure condition 6 (sufficient condition): A disclosure range of attribute information is decided by comparing preferences of an attribute information disclosure requester and those of this side. As a result of the comparison, when all of the preferences are the same, a name, age, sex, and mail address are disclosed, and when part of the preferences are the same, a mail address is disclosed. In other cases, no attribute information is disclosed. Preferences compared are those contained in attribute information managed in the personal attribute information creation and management part.

Disclosure condition 7 (sufficient condition): Attribute information of the same range of attribute information disclosed by an attribute information disclosure requester is disclosed.

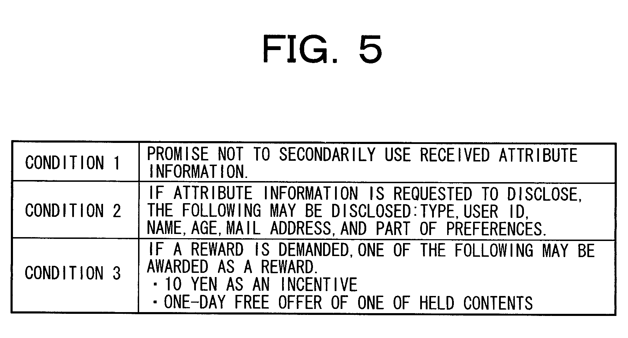

It is assumed that, in the center device 10, the receive condition management part 124 manages the attribute information receive conditions shown in FIG. 5. That is,
Receive condition 1: A promise is made not to secondarily use received attribute information.
Receive condition 2: When the attribute information of an agency is requested to disclose, a type, user ID, name, age, sex, mail address, and part of preferences may be disclosed.
Receive condition 3: When a reward is demanded, one of the following may be offered: 10 yen as an incentive, and one-day free offer of one of held contents.

Disclosure conditions and receive conditions are set by a user of the user terminal and an administrator of the center device. To facilitate the setting, if levels are set in advance correspondingly to combinations of disclosure conditions and combinations of receive conditions, users have only to specify the levels to set disclosure conditions and receive conditions.

For example, for the disclosure conditions of FIG. 4, if unconditional disclosure of attribute information is set to level 0, application of all conditions is set to level 1, application of disclosure conditions 1, 2, and 4 is set to level 2, and application of disclosure conditions 1, 2, 3, and 4 is set to level 3, the level 2 is selected to reject disclosure requests of other than family members and friends. If attribute information is disclosed to agencies to offer a reward, in addition to family members and friends, required disclosure conditions can be set by selecting level 3.

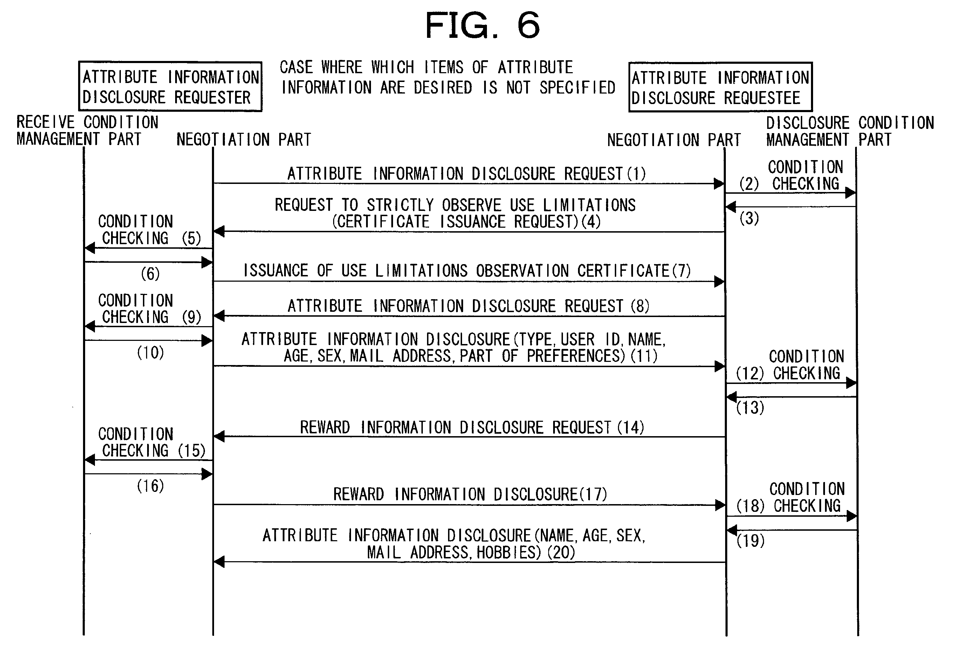

A procedure of negotiation performed under these disclosure conditions and receive conditions is shown in a sequence diagram of FIG. 6. This procedure is for a case where an attribute information disclosure requester (center device 10) requests attribute information from an attribute information disclosure requestee (user terminal 50) without specifying desired items of the attribute information.

The negotiation part of an attribute information disclosure requester sends a request to disclose attribute information to the negotiation part of an attribute information disclosure requestee (1). The negotiation part of the attribute information disclosure requestee has the disclosure condition management part check disclosure conditions (2), confirms that the disclosure condition 1 is necessary (3), and sends a use limitation observation request (certificate issuance request) to the negotiation part of the requester (4) . The negotiation part of the attribute information disclosure requester has the receive condition management part check receive conditions (5), confirms the receive condition 1 (6), and then issues a use limitation observation certificate to the negotiation part of the attribute information disclosure requestee (7). Upon confirming the certificate, the negotiation part of the attribute information disclosure requestee sends an attribute information disclosure request to the negotiation part of the attribute information disclosure requester, based on the disclosure condition 2 (8). The negotiation part of the attribute information disclosure requester has the receive condition management part check receive conditions (9), confirms the receive condition 2 (10), and then discloses agency attribute information (type, user ID, name, age, sex, mail address, and part of preferences) to the attribute information disclosure requestee (11). The negotiation part of the attribute information disclosure requestee determines from the attribute information that the attribute information disclosure requester is an agency, has the disclosure condition management part check disclosure conditions in that case (12), and confirms the disclosure condition 4 via the disclosure condition 3 (13).

The negotiation part of the attribute information disclosure requestee passes a reward information disclosure request to the negotiation part of the attribute information disclosure requester according to the disclosure condition 4 (14). The negotiation part of the attribute information disclosure requester has the receive condition management part check receive conditions (15), confirms the receive condition 3 (16), and then discloses "10 yen offer as an incentive" or "one-day free offer of one of held contents" as reward information (17).

The negotiation part of the attribute information disclosure requester has the disclosure condition management part check disclosure conditions (18), and confirms the disclosure condition 4 (19), and then, in return for free contents having higher priority in the disclosure condition 4, discloses attribute information (name, age, sex, mail address, and hobby) (20).

In this way, the negotiation parts of the attribute information disclosure requester and the attribute information disclosure requestee automatically perform negotiation processing according to disclosure conditions and receive conditions set in advance, and as a result, decide the range of attribute information to be disclosed.

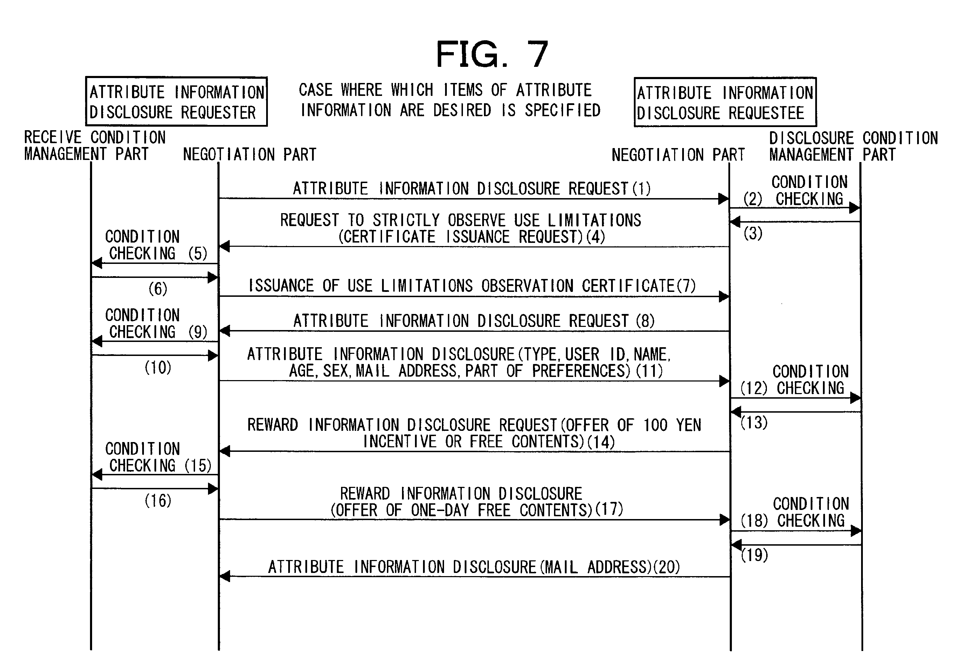

Next, FIG. 7 shows a sequence in a case where an attribute information disclosure requester requests attribute information from an attribute information disclosure requestee by specifying desired items of the attribute information.

In this case, the negotiation part of the attribute information disclosure requester sends a request to disclose "mail address" of attribute information to the negotiation part of the attribute information disclosure requestee (1).

Processing from (2) to (13) is the same as in FIG. 6. That is, the negotiation part of the attribute information disclosure requestee has the disclosure condition management part check disclosure conditions (2), confirms that the disclosure condition 1 is necessary (3), and sends a use limitation observation request (certificate issuance request) to the negotiation part of the attribute information disclosure requester (4). The negotiation part of the attribute information disclosure requester has the receive condition management part check receive conditions (5), confirms the receive condition 1 (6), and then issues a use limitation observation certificate to the negotiation part of the attribute information disclosure requestee (7). Upon confirming the certificate, the negotiation part of the attribute information disclosure requestee sends an attribute information disclosure request to the negotiation part of the attribute information disclosure requester, based on the disclosure condition 2 (8). The negotiation part of the attribute information disclosure requester has the receive condition management part check receive conditions (9), confirms the receive condition 2 (10), and then discloses attribute information (type, user ID, name, age, sex, mail address, and part of preferences) to the attribute information disclosure requestee (11). The negotiation part of the attribute information disclosure requestee determines from the attribute information that the attribute information disclosure requester is an agency, has the disclosure condition management part check disclosure conditions in that case (12) , and confirms the disclosure condition 4 via the disclosure condition 3 (13).

Judging a condition for passing a mail address to the agency from the disclosure condition 4, the negotiation part of the attribute information disclosure requestee requests the offer of 100 yen as an incentive or free contents from the negotiation part of the attribute information disclosure requester as a reward information disclosure request (14). The negotiation part of the attribute information disclosure requester has the receive condition management part check receive conditions (15) , confirms the receive condition 3 (16) , and then discloses reward information indicating one-day free offer of one of held contents satisfying the request of the attribute information disclosure requestee (17).

The negotiation part of the attribute information disclosure requestee has the disclosure condition management part check disclosure conditions (18), decides the disclosure of a mail address in return for free contents from the disclosure condition 4 (19), and discloses attribute information (mail address) (20).

In this way, the negotiation parts of the attribute information disclosure requester and the attribute information disclosure requestee automatically perform negotiation processing for disclosing requested attribute information according to disclosure conditions and receive conditions set in advance, and discloses the attribute information to the attribute information disclosure requester.

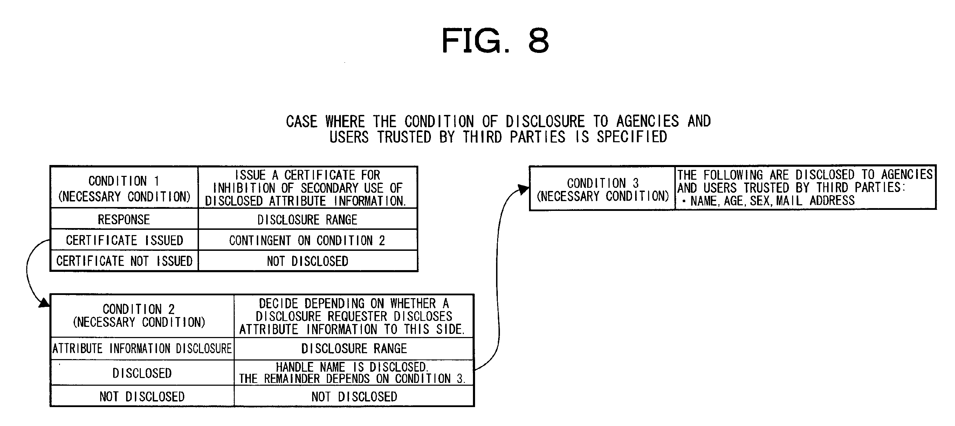

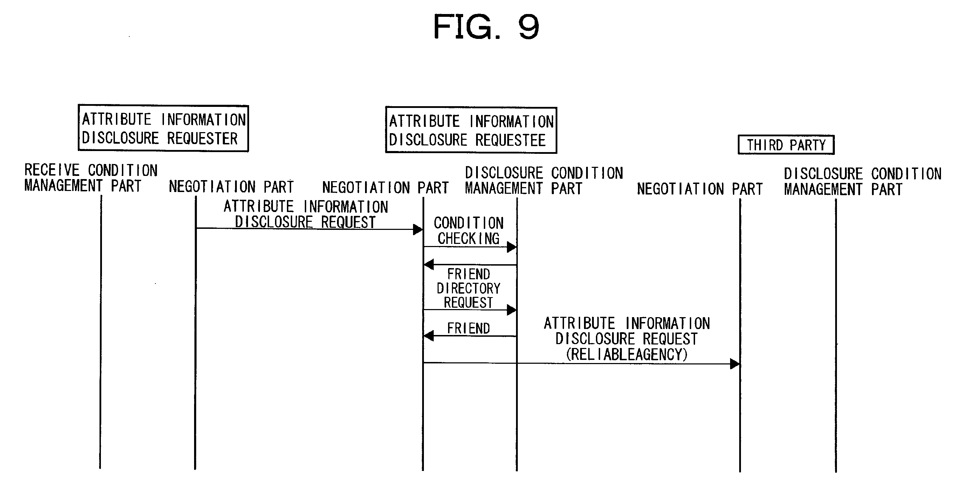

As shown in FIG. 8, if the condition of "attribute information is disclosed to agencies and users trusted by a third party" (disclosure condition 3) is included in disclosure conditions managed by the disclosure condition management part, the negotiation part of a attribute information disclosure requestee, as shown in FIG. 9, to locate the trusting third party, requests a friend directory from the disclosure condition management part, obtains the trustworthy friend (third party) from the friend directory, requests the negotiation part of the third party to disclose "trusting agency information" of attribute information of the third party, and judges, based on it, whether the agency of the attribute information disclosure requester is trustworthy. If it is trustworthy, the attribute information is disclosed to the attribute information disclosure requester.

As described above, in the attribute information agreement formation system, since the center device and the terminals hold their own attribute information and manages their disclosure conditions and receive conditions, negotiation processing is automatically performed based on the disclosure conditions and receive conditions, and according to the processing results, attribute information can be exchanged through a transmission line.

In the negotiation processing, when it is judged from disclosure conditions that attribute information is "not disclosed", a network part may not automatically inform the attribute information disclosure requester of "not disclosed" and may make a pop-up display indicating the existence of access to attribute information disclosure from the outside to inquire of the attribute information disclosure requestee whether to disclose information or which range of the information to be disclosed.

If "make inquiries to user" is set as a receive condition and an attribute information disclosure requester is requested during negotiation, the attribute information disclosure requester may respond with manual operations through GUI.

The server may be requested to create attribute information.

The user terminals may get preference information from the server instead of creating it by itself.

Although, in this embodiment, the negotiation parts perform negotiation in disclosing attribute information and negotiation in receiving the attribute information, they may perform only either of the negotiations.

### (Second embodiment)

In the second embodiment, a description is made of a system that performs negotiation on a contents disclosure range in association with the disclosure of attribute information, and distributes contents.

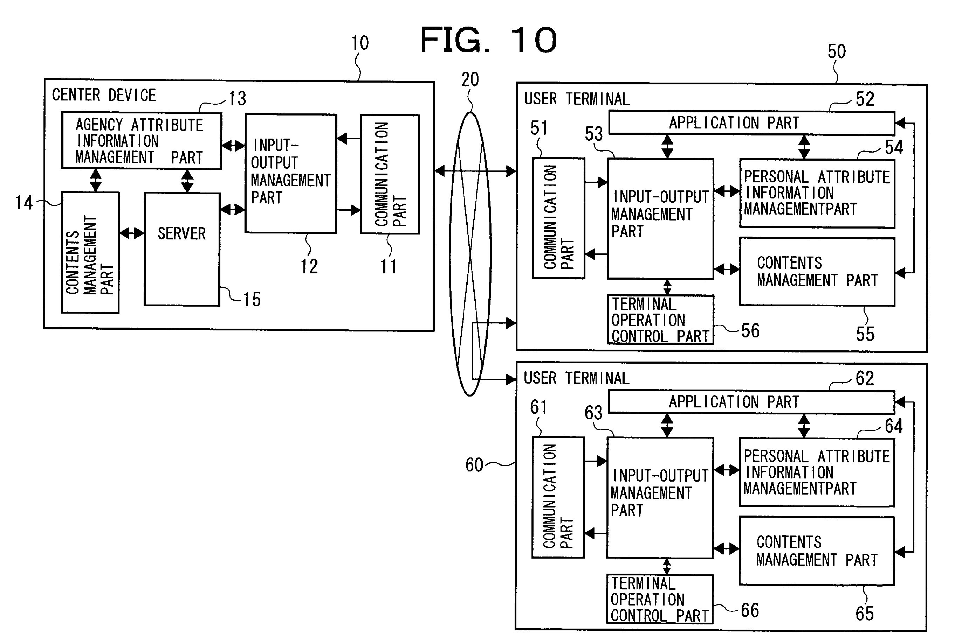

This system is shown in FIG. 10. This system is different from that in the first embodiment (FIG. 1), in that the user terminals 50 and 60 include contents management parts 55 and 65 that store and manage contents, and terminal operation control parts 56 and 65 that operate and control the functions of user terminals 50 and 60.

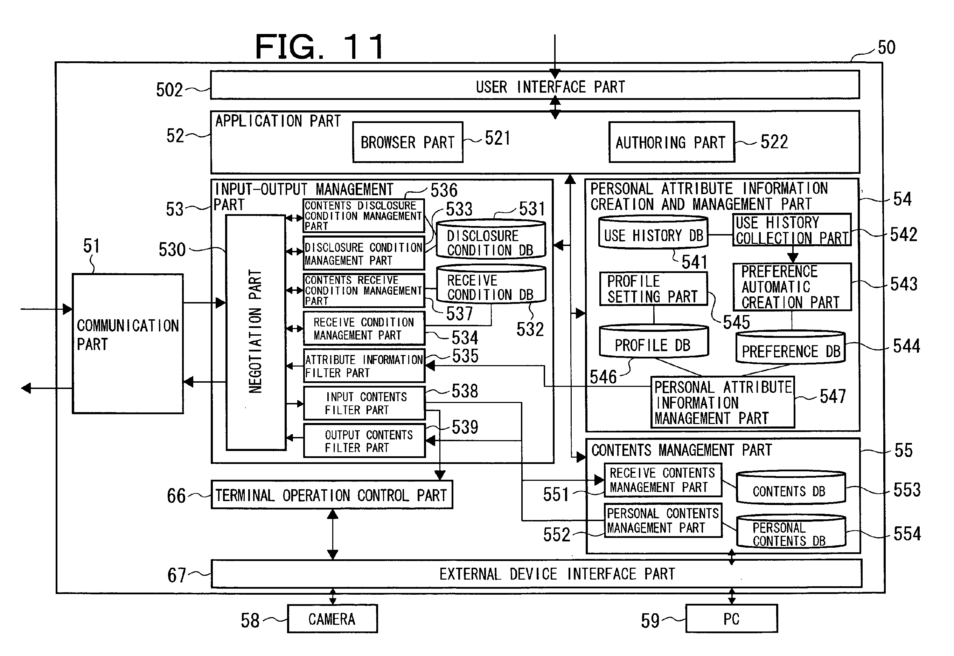

FIG. 11 shows a detailed configuration of the user terminal 50. The communication part 51, application part 53, and personal attribute information creation and management part 54 have the same configuration as those in the first embodiment (FIG. 2).

The terminal operation control part 56 receives terminal operation commands inputted through the input-output management part 53, and operates and controls terminal functions according to the terminal operation commands. For example, when a command to make a storage reservation for contents is received as a terminal operation command, the terminal operation control part 56 executes the storage reservation according to the command. When terminal operation commands such as contents deletion, movement, copy, and reproduction are received, the terminal operation control part 56 deletes, moves, copies, and reproduces contents managed by the contents management part 55, correspondingly to the commands.

The contents management part 55 comprises: a receive contents management part 551 that manages, as receive contents, contents received from the outside by the input-output management part 53 through a transmission line; a contents DB 553 that stores the receive contents; a personal contents management part 552 that manages, as personal contents, contents received from AV devices such as an external camera 58 through an external device interface part 57 or contents created by applications on the terminal (PC) 59; and a personal contents DB 554 that stores personal contents.

The input-output management part 53 comprises: a contents disclosure condition management part 536 that sets and manages contents disclosure conditions; a disclosure condition management part 533 that sets and manages attribute information disclosure conditions; a disclosure condition DB 531 that stores contents and attribute information disclosure conditions; a receive condition management part 537 that sets and manages receive conditions for receiving contents from contents providers; a receive condition management part 534 that sets and manages attribute information receive conditions; a receive condition DB 532 that stores contents and attribute information receive conditions; a negotiation part 530 that performs negotiation according to the disclosure conditions and receive conditions of contents and attribute information, and decides a disclosure range of the attribute information and contents; an attribute information filter part 535 that, when sending attribute information, modifies it to output it only in a disclosure range decided by the negotiation part 530; an input contents filter part 538, when receiving the contents, modifies receive contents to input the contents only in a disclosure range decided by the negotiation part 530; and an output contents filter part 539 that, when disclosing contents, modifies personal contents to output the contents only in a disclosure range decided by the negotiation part 530.

The functions of the parts of the user terminals are implemented by having computers included in the user terminals perform program-defined processing.

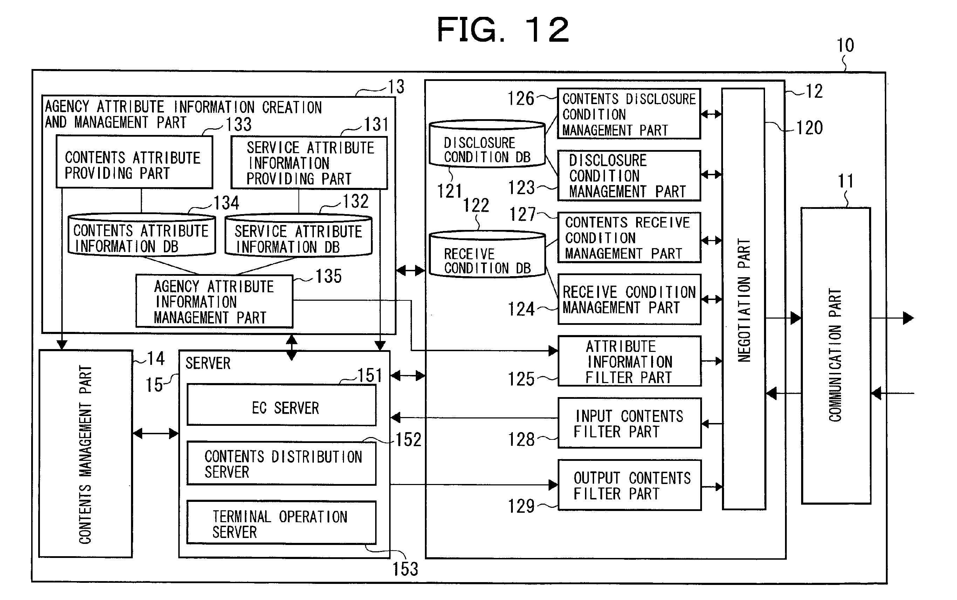

FIG. 12 shows a detailed configuration of the center device 10. The communication part 11, the contents management part 14, and the agency attribute information creation and management part 13 have the same configuration as those in the first embodiment (FIG. 3). The server part 15 comprises: an EC server 151 that executes EC services; a contents distribution server 152 that executes contents distribution services; and a terminal operation server 153 that services terminal operations such as a contents storage reservation operation. The input-output management part 12 has the same configuration as the input-output management part 53 of the user terminal 50.

The functions of the parts of the center device are implemented by having a computer included in the center device perform program-defined processing.

Disclosure conditions of contents set and managed by the contents disclosure condition management part 536 of the user terminal 50 and the contents disclosure condition management part 126 of the center device 10 are as described below.

### (1) Disclosure condition 1

If a contents providee is a user, application, contents, or agency, contents to be disclosed are decided according to the attribute of the contents providee.

### (2) Disclosure condition 2

Contents to be disclosed are decided according to a disclosure level of attribute information of a contents providee. For example, if the contents providee tells an address and name, contents are disclosed.

### (3) Disclosure condition 3

By comparing the attribute information of a contents providee and attribute information managed by contents provider, contents to be disclosed are decided. For example, contents are disclosed to persons having similar preferences.

### (4) Disclosure condition 4

According to a reward received from a contents providee, contents to be disclosed are decided. For example, if money, an incentive, or free contents are offered, contents are disclosed.

### (5) Disclosure condition 5

Contents are disclosed to specific contents providees. For example, contents are unconditionally disclosed to friends described in a "friend directory".

### (6) Disclosure condition 6

Contents providees must strictly observe the right to use disclosed contents. For example, inhibition of transfer without permission should be accepted.

### (7) Disclosure condition 7

According to a confidence evaluation for a contents providee by a third party, contents to be disclosed are decided.

### (8) Disclosure condition 8

Contents to be disclosed are decided by combinations of the disclosure conditions 1 to 7.

### (9) Disclosure condition 9

Priority is assigned to combined conditions to decide contents to be disclosed, according to the priority.

### (10) Disclosure condition 10

A necessary condition, sufficient condition, or necessary and sufficient condition is assigned to each of combined conditions so that, unless the necessary condition is satisfied, no contents are disclosed, and contents to be disclosed are decided according to a degree with which the sufficient condition is satisfied.

Contents receive conditions set and managed by the contents receive condition management part 537 of the user terminal 50 and the contents receive condition management part 127 of the center device 10 are as described below.

### (1) Receive condition 1

To receive the contents, all or part of contents managed by the contents providee are disclosed.

### (2) Receive condition 2

A reward for contents reception is passed to a contents provider. For example, money is paid to receive contents.

### (3) Receive condition 3

Use limitations on disclosed contents should be strictly observed.

### (4) Receive condition 4

In a case where a contents provider is a user, application, contents, or agency, whether to receive sent contents is decided according to the attribute of the contents provider.

### (5) Receive condition 5

Whether to receive contents is decided according to a disclosure level of attribute information of a contents provider. For example, contents from persons who tell their address and name are received.

### (6) Receive condition 6

By comparing the attribute information of a contents provider and attribute information managed by the contents providee, whether to receive contents is decided. For example, contents from persons having similar preferences are received.

### (7) Receive condition 7

Contents of specific contents providers are received (or not received). For example, contents from persons described in a friend directory are received, and contents of persons described in a black list are not received.

### (8) Receive condition 8

According to a confidence evaluation for a contents provider by a third party, whether to receive contents is decided.

### (9) Receive condition 9

Whether to receive contents is decided depending on whether the request of the contents disclosure is made by a contents provider (PUSH type) or a contents providee (PULL type).

### (10) Receive condition 10

Whether to receive contents is decided by combinations of the receive conditions 1 to 9.

The negotiation part of the terminal or center device that is to disclose contents and the negotiation part of the terminal or center device that is to receive the contents form an agreement on conditions for disclosing contents between them so that the former satisfies disclosure conditions managed by the disclosure condition management part and the latter observes receive conditions managed by the receive condition management part.

Next, a specific example of negotiation in contents distribution is described.

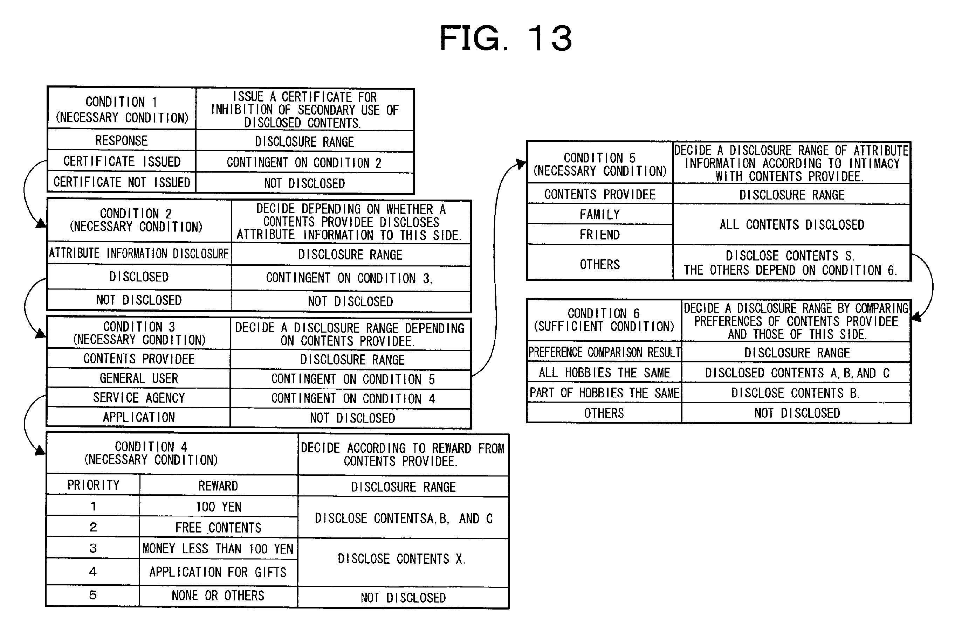

A description is made of a case where personal contents are distributed from the user terminal 50 to the user terminal 60. It is assumed that, in the user terminal 50, the contents disclosure condition management part 536 manages contents disclosure conditions shown in FIG. 13. That is,
Disclosure condition 1 (necessary condition): A contents providee issues a certificate for inhibition of secondary use of disclosed contents. If the contents providee responds with "certificate issued", a disclosure range is decided depending on the next condition 2. If the contents providee responds with "certificate not issued", contents are not disclosed.
Disclosure condition 2 (necessary condition): Whether to disclose contents to a contents providee is decided depending on whether the contents providee discloses attribute information to the contents provider. If the contents providee discloses attribute information, a disclosure range is decided depending on condition 3. If the contents providee discloses no attribute information, contents are not displayed.
Disclosure condition 3 (necessary condition): A disclosure range of contents is decided depending on the type of a contents providee. If a contents providee is a general user, a disclosure range is decided depending on condition 5. If a contents providee is a service agency, a disclosure range is decided depending on condition 4. If the contents providee is an application, no contents are disclosed.
Disclosure condition 4 (necessary condition): A disclosure range of attribute information is decided according to a reward from a contents providee. If 100 yen is paid as a reward, or free contents are provided, contents A, B, and C are disclosed. If money less than 100 yen is paid, or a qualification to apply for gifts is obtained, contents X are disclosed.

If a reward is other than the above or no reward is offered, no contents are disclosed. Priority is given to the rewards in this order, and when plural conditions are presented from a contents providee, a disclosure range of contents is decided according to the priority. Without directly specifying contents as a disclosure range for a reward, attributes (for example, child's image, his (her) own image, landscape picture, and landscape video image, etc.) may be assigned to individual contents so that the attributes are assigned to a reward. That is to say, if 100 yen is paid as a reward, contents to which attribute of "landscape picture" is assigned are disclosed, and if 500 yen is paid as a reward, contents to which attribute of "landscape video image" is assigned are disclosed.

Instead of the feature as above described, a directory (or folder) may be assigned to individual contents so that the directory is assigned to a reward. Citing an example of this feature, if 100 yen is paid as a reward, contents stored in a folder assigned as "landscape picture folder" are disclosed, and if 500 yen is paid as a reward, contents stored in a folder assigned as "landscape video image folder" are disclosed.
Disclosure condition 5 (sufficient condition): A disclosure range of contents is decided according to the degree of intimacy with a contents providee. If a contents providee is a family member or friend, all contents are disclosed. If a contents providee is other than the above, contents S are disclosed, but disclosure range of contents other than S depends on disclosure condition 6. Whether a contents providee is a friend is decided from whether the friend is registered in a "friend directory" within the disclosure condition DB.
Disclosure condition 6 (sufficient condition): A disclosure range of contents is decided by comparing preferences of a contents providee and those of the contents provider. As a result of the comparison, when all of the preferences are the same between, contents A, B, and C are disclosed, and when part of the preferences are the same, contents B are disclosed. In other cases, no contents are disclosed. Preferences compared are those contained in attribute information managed in the personal attribute information creation and management part.

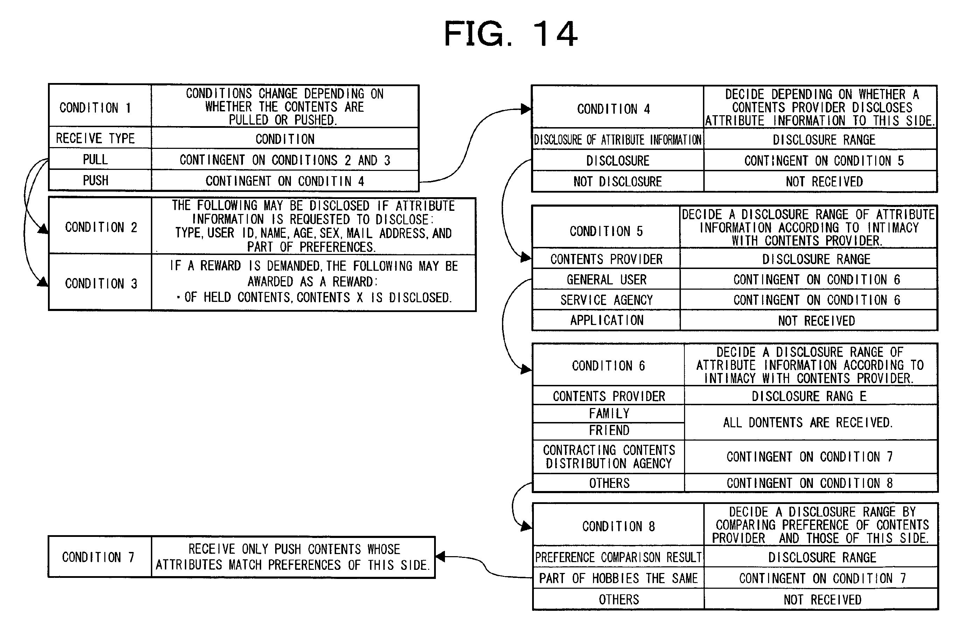

It is assumed that, in the user terminal 60, the receive condition management part manages contents receive conditions shown in FIG. 14. That is,
Receive condition 1: Receive conditions change depending on whether contents of interest have been PULLed by the contents providee or PUSHed. If the contents have been PULLed, the receive condition 1 depends on receive conditions 2 and 3, and if PUSHed, it depends on receive condition 4-7.
Receive condition 2: If the attribute information of the contents providee is requested to disclose, a type, user ID, name, age, sex, mail address, and part of preferences may be disclosed.
Receive condition 3: When a reward is demanded, contents X of providee's contents may be offered as a reward.
Receive condition 4: A disclosure range of receive contents is decided depending on whether a contents provider has disclosed attribute information to this side. When attribute information has been disclosed, a disclosure range of receive contents is decided depending on receive condition 5, and when no attribute information has been disclosed, no contents are received.
Receive condition 5: A disclosure range of receive contents is decided depending on the type of contents provider. If a contents provider is a general user or service agency, a disclosure range of contents is decided depending on receive condition 6. If the contents provider is an application, no contents are received. The identification of service agencies is judged from an contracting agency list stored in the disclosure condition DB.
Receive condition 6: A disclosure range of receive contents is decided depending on the degree of intimacy with a contents provider. If a contents provider is a family member or friend, all contents are disclosed. If a contents provider is a contracting contents distribution agency, a disclosure range of receive contents is decided depending on receive condition 7. In other cases, a disclosure range of receive contents is decided depending on receive condition 8.
Receive condition 7: Only PUSH contents whose attributes match preferences of the contents providee are received.
Receive condition 8: A disclosure range of receive contents is decided by comparing preferences of a contents provider and those of a contents providee. When part of the preferences are the same, a disclosure range of receive contents is decided depending on receive condition 7. In other cases, no contents are received.

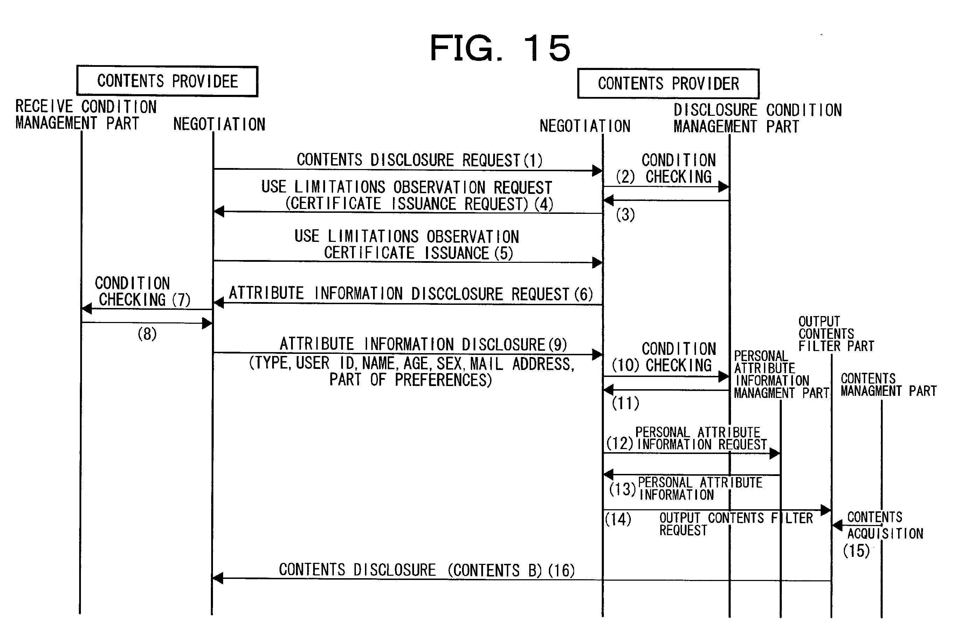

FIG. 15 shows a procedure between the user terminal 60 (contents PULL source; contents providee ) and the user terminal 50 (contents PULL destination; contents provider) when the user terminal 50 distributes personal contents upon a request from the user terminal 60.

The negotiation part of the contents providee requests the contents provider to disclose contents (1). The negotiation part of the contents provider has the disclosure condition management part check disclosure conditions (2), confirms that the disclosure condition 1 is necessary (3), and requests the contents providee to strictly observe use limitations (4). The negotiation part of the contents providee issues a certificate of use limitation observation (5). Upon confirming the certificate, the negotiation part of the contents provider requests disclosing attribute information, based on the disclosure condition 2 (6). The negotiation part of the contents providee has the receive condition management part check receive conditions (7), confirms the receive condition 2 (8), and discloses attribute information (type, user ID, name, age, sex, mail address, and part of preferences) (9). The negotiation part of the contents provider determines from the attribute information that a contents providee is a general user, has the disclosure condition management part check disclosure conditions in that case (10), confirms that a contents providee is not a family member or friend of the disclosure condition 5 (11), and to make preference comparison of the disclosure condition 6, requests the personal attribute information of the user of the user terminal 50 from the personal attribute information management part (12). Upon obtaining the personal attribute information (13), the negotiation of the contents provider compares it with the attribute information of the contents providee, if part of preferences is the same, decides the disclosure of contents B from the disclosure condition 8, and requests the output contents filter part to disclose only the contents B (14). The output contents filter part obtains the contents B from the contents management part (15) and discloses the contents B to the negotiation part of the contents providee (16).

The output contents filter part can make modifications so as to output only part of the contents B in (15) . For example, if the contents providee is 16 or less years of age, violence scenes in contents may be cut and outputted.

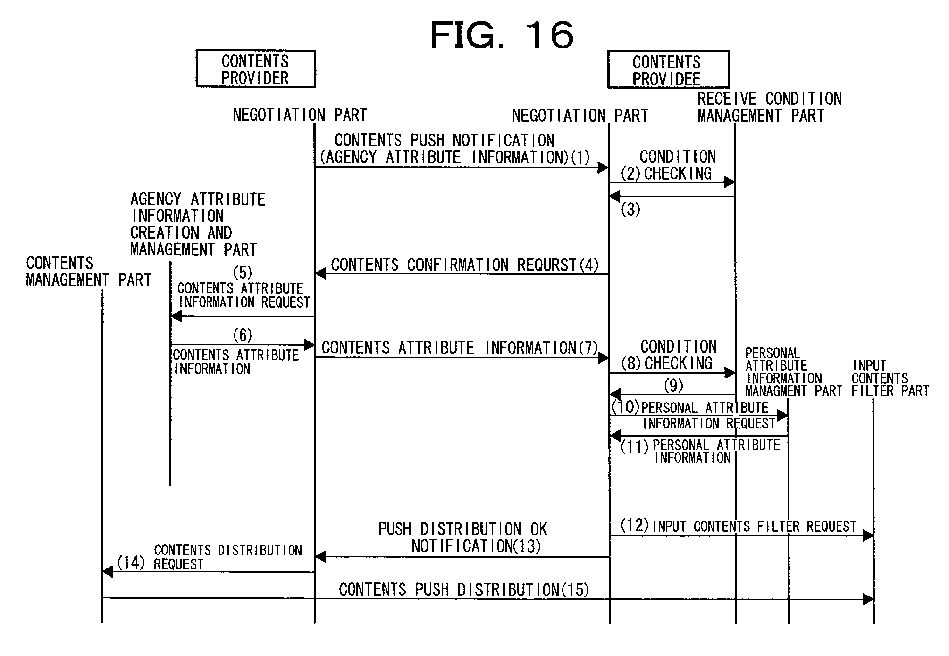

FIG. 16 shows a procedure between the center device (contents PUSH source; contents provider) and the user terminal (contents PUSH destination; contents providee) when the center device provides PUSH type contents to the user terminal. The contents receive condition management part of the user terminal manages contents receive conditions of FIG. 14.

The negotiation part of the contents provider transmits contents PUSH notification containing agency attribute information to the contents providee (1) . The negotiation part of the contents providee has the receive condition management part check receive conditions (2), confirms that the receive condition 4 required for PUSH type is satisfied (3), confirms that the contents provider is a contracting agency, and sends a request to confirm contents to the contents provider (4) . The negotiation part of the contents provider requests contents attribute information from the agency attribute information creation and management part (5), the agency attribute information creation and management part passes the contents attribute information to the negotiation part (6), and the negotiation part sends the contents attribute information to the contents providee (7).

The negotiation part of the contents providee has the receive condition management part check receive conditions (8), confirms that it is necessary to check preferences of the contents providee to examine the receive condition 7 (9), and requests personal attribute information from the personal attribute information management part (10). The personal attribute information management part passes personal attribute information to the negotiation part (11). The negotiation part confirms that there are PUSH contents matching preferences of the contents providee, and decides the reception of PUSH distribution of the contents. The negotiation part requests the input contents filter part to input the decided contents (12) and informs the negotiation part of the contents provider of PUSH distribution OK (13). The negotiation part of the contents provider requests the contents management part to distribute the contents (14), and the contents management part PUSH-distributes the contents to the contents providee (15).

In this way, the negotiation part of the device that is to receive the contents, and the negotiation part of the device that is to disclose contents perform negotiation between the two to form an agreement for contents disclosure so that the former observes receive conditions managed by the receive condition management part and the latter satisfies disclosure conditions managed by the disclosure condition management part.

Also in a case where the user terminal accepts a terminal operation command from the outside (command sender), in the same way, the negotiation part of the user terminal (command receiver) that is to receive a terminal operation command performs negotiation with the negotiation part of the command sender so that the negotiation part of the command receiver confirms that the command sender is a contracting agency or friend satisfying receive conditions, and confirms that the contents of the terminal operation command satisfies the receive conditions, before deciding the reception of the terminal operation command.

The negotiation part of the command receiver requests the input contents filter part to input the decided terminal operation command, and informs the negotiation part of the command sender of terminal operation command acceptance OK. When the command sender has transmitted the terminal operation command, in the receiving user terminal, the terminal operation command is sent to the terminal operation control part through the input contents filter part, and the terminal operation control part operates and controls terminal functions according to the terminal operation command. Such negotiation processing makes it possible to accept storage reservation operation service by a contracting agency, or when the user will be absent for a long time, makes it possible to ask his (her) friend to perform a contents storage reservation operation on the user terminal through a friend's terminal.

In this way, in this system, negotiation processing can be performed for the exchange of contents and terminal operation commands.

Although, in this embodiment, the negotiation parts perform negotiation in disclosing contents and negotiation in receiving the contents, they may perform only either of the negotiations.

Although, in this embodiment, the negotiation parts perform negotiations in the exchange of contents and terminal control commands, they may perform only either of negotiations.

The present invention may also take the following configuration.

A device having negotiation functions is provided with a personal attribute information creation and management part that stores and manages users' attribute information, and an input-output management part that controls the output of users' attribute information to external devices and the input of others' attribute information from external devices.

The device having negotiation functions is provided with: a contents management part that manages contents; a server part that implements services; a service attribute information creation and management part that manages attribute information for contents and services; and an input-output management part that controls the output of attribute information of services and contents to external devices, and the input of users' attribute information inputted from external devices.

The personal attribute information creation and management part is provided with: a profile setting part that receives the registration of profile information; a use history collection part that collects user history information of the device; a preference automatic creation part that analyzes preferences from collected use history information to create preference information; and a personal attribute information management part that manages, as attribute information, profile information and preference information in combination, and outputs the attribute information in response to requests from the outside.

The service attribute information creation and management part is provided with: a contents attribute providing part that provides attribute information to contents managed by the contents management part; a service attribute information providing part that provides attribute information to services implemented by the server part; and an agency attribute information management part that manages contents attribute information and service attribute information in combination as attribute information for contents and services, and outputs the attribute information in response to requests from the outside.

The input-output management part is provided with: a disclosure condition management part that sets and manages disclosure conditions for attribute information disclosure requesters; a negotiation part that performs negotiation with an attribute information disclosure requester according to disclosure conditions and decides a disclosure range of attribute information; and attribute information filter part that, when transmitting attribute information, modifies the attribute information so as to output it only in a disclosure range decided by the negotiation part.

The input-output management part is provided with: a receive condition management part that sets and manages receive conditions for receiving attribute information from attribute information disclosure requestees; and a negotiation part that performs negotiation with an attribute information disclosure requestee according to receive conditions, and receives the attribute information from the attribute information disclosure requestee.

A disclosure condition is to decide items of attribute information to be disclosed, according to the attribute of an attribute information disclosure requester.

A disclosure condition is to decide items of attribute information to be disclosed, according to a disclosure degree of the attribute information of an attribute information disclosure requester.

A disclosure condition is to decide items of attribute information to be disclosed, by comparison with the attribute information of an attribute information disclosure requester.

A disclosure condition is to decide items of managed attribute information to be disclosed, according to a reward from an attribute information disclosure requester.

A disclosure condition is to decide items of attribute information to be disclosed, according to whether an attribute information disclosure requester is a specific one.

A disclosure condition is that use limitations on disclosed attribute information must be strictly observed.

A disclosure condition is to decide items of attribute information to be disclosed, according to a confidence evaluation for an attribute information disclosure requester by a third party.

A disclosure condition is to decide items of attribute information to be disclosed, according to a combination of two or more of the disclosure conditions.

A disclosure condition is to decide items of attribute information to be disclosed, according to priority assigned to combinations of two or more of the disclosure conditions.

A disclosure condition is to assign a necessary condition, sufficient condition, or necessary and sufficient condition to combinations of two or more of the disclosure conditions so that, unless the necessary condition is satisfied, no attribute information is disclosed, and items of attribute information to be disclosed are decided according to a degree with which the sufficient condition is satisfied.

A receive condition is to disclose all or part of items of attribute information managed by the attribute information disclosure requester to an attribute information disclosure requestee to receive the attribute information from the attribute information disclosure requestee.

A receive condition is to pass a reward to an attribute information disclosure requestee to receive the attribute information from the attribute information disclosure requestee. The reward is an incentive or contents.

A receive condition is to strictly observe use limitations to receive the attribute information from the attribute information disclosure requestee.

A receive condition is a combination of two or more of the receive conditions.

The negotiation part of the attribute information disclosure requestee forms an agreement on conditions for disclosing attribute information with the negotiation part of a device of an attribute information disclosure requester so that disclosure conditions managed by the disclosure condition management part are satisfied.

The negotiation part of the attribute information disclosure requester forms an agreement on conditions for disclosing attribute information with the negotiation part of a device of an attribute information disclosure requestee, according to receive conditions managed by the disclosure condition management part.

The personal attribute information creation and management part obtains at least part of user's attribute information from a server.

A device having negotiation functions is provided with: a personal attribute information creation and management part that stores and manages users' attribute information; a contents management part that stores and manages contents; and an input-output management part that controls the output of users' attribute information and contents to external devices and the input of others' attribute information and contents from external devices.

The contents management part is provided with: a receive contents storage part that stores and manages, as receive contents, contents received from the outside by the input-output management part through a transmission line; and a personal contents management part that stores and manages, as personal contents, contents received from external AV devices through an external device interface part or contents created by applications on the device.

A terminal operation command is a command for operating reservations for storing contents, and the terminal operation control part executes storage reservation of the device according to the command.

The terminal operation command is a command for operating contents use such as contents deletion, movement, copy, and reproduction, and the terminal operation control part executes contents use in the device according to the command.

A contents disclosure condition is to decide contents to be disclosed according to the attribute of a contents providee.

A contents disclosure condition is to decide contents to be disclosed according to a disclosure degree of attribute information of a contents providee.

A contents disclosure condition is to decide contents to be disclosed by comparing the attribute information of a contents providee and attribute information managed by a contents provider.

A contents disclosure condition is to decide contents to be disclosed according to a reward from a contents providee.

A contents disclosure condition is to decide contents to be disclosed depending on whether a contents providee is a specific one.

A contents disclosure condition is that the right to use disclosed contents is strictly observed in a contents providee.

A contents disclosure condition is to decide contents to be disclosed according to a confidence evaluation for a contents providee by a third party.

A contents disclosure condition is to decide contents to be disclosed according to a combination of two or more of the contents disclosure conditions.

A contents disclosure condition is to decide items of contents to be disclosed, according to priority assigned to combinations of two or more of the contents disclosure conditions.

A contents disclosure condition is to assign a necessary condition, sufficient condition, or necessary and sufficient condition to combinations of two or more of the contents disclosure conditions so that, unless the necessary condition is satisfied, no contents are disclosed, and contents to be disclosed are decided according to a degree with which the sufficient condition is satisfied.

A contents receive condition is to disclose all or part of contents managed by a contents providee to a contents provider to receive the contents from the contents provider.

A contents receive condition is to pass a reward of contents disclosure to a contents provider to receive the contents from the contents provider.

A contents receive condition is to strictly observe use limitations on contents disclosed from the contents provider.

A contents receive condition is to decide whether to receive contents, according to the attribute of a contents provider.

A contents receive condition is to decide whether to receive contents, according to a disclosure degree of the attribute information of a contents provider.

A contents receive condition is to decide whether to receive contents by comparing the attribute information of a contents providee and attribute information managed by a contents provider.

A contents receive condition is to decide whether to receive contents depending on whether a contents provider is a specific one.

A contents receive condition is to decide whether to receive contents according to a confidence evaluation for a contents provider by a third party.

A contents receive condition is to decide whether the request of the contents is made by a contents provider or a contents providee.

A contents receive condition is to decide whether to receive contents according to a combination of two or more of the contents receive conditions.

The negotiation part of the contents provider forms an agreement on conditions for disclosing contents with the negotiation part of a device of a contents providee so that contents disclosure conditions managed by the contents disclosure condition management part are satisfied.

The negotiation part of the contents providee forms an agreement on conditions for disclosing contents with the negotiation part of a device of a contents provider, according to contents receive conditions managed by the contents receive condition management part.

As is apparent from the above description, in the agreement formation system and devices according to the present invention, negotiation processing for the disclosure of attribute information, the offering of contents, and the acceptance of terminal operation commands can automatically performed.

The computer program of the present invention can commit such negotiation processing to a computer.

Such negotiation processing enables smooth implementation of network services requiring the disclosure of attribute information and makes it possible to increase market value of the attribute information and promote an efficient use of the attribute information.

Concerns and dissatisfaction with the offering of contents are removed, contributing to promotion of contents distribution.

Wrong operation of terminal operation services is purged and the usability of the terminal operation services can be increased.

Although the present invention has been described based on preferred embodiments shown in the drawings, it is apparent that the present invention can be easily changed and modified by those skilled in the art, and such modifications are also contained in the range of the present invention.

## Claims

1. An agreement formation system in which:
a first device comprises an attribute information creation and management part that stores and manages attribute information, an attribute information disclosure condition management part that sets and manages disclosure conditions for the disclosure destination of the attribute information, and a first negotiation part that performs negotiation with the disclosure destination on the disclosure of the attribute information according to the disclosure conditions; and
a second device comprises an attribute information receive condition management part that sets and manages receive conditions for receiving attribute information from the disclosure source of the attribute information, and a second negotiation part that performs negotiation with the disclosure source on the disclosure of attribute information according to the receive conditions,
wherein an agreement on conditions for disclosing attribute information is formed between the first negotiation part of the first device and the second negotiation part of the second device, the first device transmits attribute information of a disclosure range agreed by the first negotiation part to the second device, and the second device receives the attribute information under a condition agreed by the second negotiation part.

2. An agreement formation system in which:
a first device comprises a contents management part that stores and manages contents, a contents disclosure condition management part that sets and manages disclosure conditions for the disclosure destination of the contents, and a first negotiation part that performs negotiation with the disclosure destination on the disclosure of the contents according to the disclosure conditions; and
a second device comprises a receive contents management part that stores and manages received contents, a contents receive condition management part that sets and manages receive conditions for receiving contents from the disclosure source of the contents, and a second negotiation part that performs negotiation with the disclosure source on the disclosure of contents according to the receive conditions.
wherein an agreement on conditions for disclosing contents is formed between the first negotiation part of the first device and the second negotiation part of the second device, the first device transmits contents of a disclosure range agreed by the first negotiation part to the second device, and the second device receives the contents under a condition agreed by the second negotiation part, and stores and manages the contents.

3. An agreement formation system in which:
a first device comprises a terminal operation control part that controls the functions of the device according to a received terminal operation command, and a first negotiation part that performs negotiation with the transmitting source of the terminal operation command on whether to receive the terminal operation command; and
a second device comprises a terminal operation command creation part that creates the terminal operation command, and a second negotiation part that performs negotiation with the transmitting destination of the terminal operation command on whether to transmit the terminal operation command,
wherein an agreement on the acceptance of the terminal operation command is formed between the first negotiation part of the first device and the second negotiation part of the second device, the second device transmits the terminal operation command agreed by the second negotiation part to the first device, the first device receives the terminal operation command agreed to accept by the first negotiation part and transfers it to the terminal operation control part, and the terminal operation control part controls the functions of the device according to the terminal operation command.

4. A device having negotiation functions, comprising:
an attribute information creation and management part that stores and manages attribute information;
a disclosure condition management part that sets and manages disclosure conditions for the disclosure destination of the attribute information;
a first negotiation part that forms an agreement with the disclosure destination of the attribute information on conditions for disclosing the attribute information according to the disclosure conditions and decides a disclosure range of the attribute information; and
an attribute information filter part that, when transmitting the attribute information to the disclosure destination, modifies the attribute information so as to output it only in a disclosure range decided by the first negotiation part.

5. The device having negotiation functions according to claim 4, wherein the attribute information is profile information containing the name and location of a user.

6. The device having negotiation functions according to claim 4, wherein the attribute information is preference information containing preferences of a user.

7. The device having negotiation functions according to claim 4, wherein the attribute information consists of profile information containing the name and location of a user, and preference information containing preferences of the user.

8. The device having negotiation functions according to claim 4, wherein the attribute information consists of the attributes of service or contents subject to the service.

9. The device having negotiation functions according to claim 4, wherein the device having negotiation functions is a terminal used by a user.

10. The device having negotiation functions according to claim 4, wherein the device having negotiation functions is a center device that provides services.

11. A device having negotiation functions, comprising:
a receive condition management part that sets and manages receive conditions for receiving attribute information from the disclosure source of attribute information; and
a second negotiation part that forms an agreement on conditions for disclosing the attribute information with the disclosure source of the attribute information according to the receive conditions, and receives the attribute information from the disclosure source, based on the agreed conditions.

12. The device having negotiation functions according to claim 11, wherein the attribute information is profile information containing the name and location of a user.

13. The device having negotiation functions according to claim 11, wherein the attribute information is preference information containing preferences of a user.

14. The device having negotiation functions according to claim 11, wherein the attribute information consists of profile information containing the name and location of a user, and preference information containing preferences of the user.

15. The device having negotiation functions according to claim 11, wherein the attribute information consists of the attributes of service or contents subject to the service.

16. The device having negotiation functions according to claim 11 , wherein the device having negotiation functions is a terminal used by a user.

17. The device having negotiation functions according to claim 11, wherein the device having negotiation functions is a center device that provides services.

18. A device having negotiation functions, comprising:
an attribute information creation and management part that stores and manages attribute information;
a disclosure condition management part that sets and manages disclosure conditions for the disclosure destination of the attribute information;
a receive condition management part that sets and manages receive conditions for receiving attribute information from the disclosure source of the attribute information;
a contents management part that stores and manages contents;
a contents disclosure condition management part that sets and manages disclosure conditions for the disclosure destination of the contents;
a first negotiation part that performs negotiation with the disclosure destination of contents according to the disclosure conditions of the contents and the disclosure conditions and receive conditions of the attribute information, and decides a disclosure range of the contents to be disclosed; and
an output contents filter part that, when disclosing the contents, modifies the contents so as to output it only in a disclosure range decided by the first negotiation part.

19. The device having negotiation functions according to claim 18, wherein the attribute information is profile information containing the name and location of a user.

20. The device having negotiation functions according to claim 18, wherein the attribute information is preference information containing preferences of a user.

21. The device having negotiation functions according to claim 18, wherein the attribute information consists of profile information containing the name and location of a user, and preference information containing preferences of the user.

22. The device having negotiation functions according to claim 18, wherein the attribute information consists of the attributes of service or contents subject to the service.

23. The device having negotiation functions according to claim 18, wherein the device having negotiation functions is a terminal used by a user.

24. The device having negotiation functions according to claim 18, wherein the device having negotiation functions is a center device that provides services.

25. A device having negotiation functions, comprising:
an attribute information creation and management part that stores and manages attribute information;
a disclosure condition management part that sets and manages disclosure conditions for the disclosure destination of the attribute information;
a receive condition management part that sets and manages receive conditions for receiving attribute information from the disclosure source of the attribute information;
a receive contents management part that stores and manages receive contents;
a contents receive condition management part that sets and manages receive conditions for receiving contents from the disclosure source of the contents; and
a negotiation part that performs negotiation with the disclosure source of contents according to the receive conditions of the contents and the disclosure conditions and receive conditions of the attribute information, and decides a disclosure range of the contents to be disclosed.

26. The device having negotiation functions according to claim 25, wherein the attribute information is profile information containing the name and location of a user.

27. The device having negotiation functions according to claim 25, wherein the attribute information is preference information containing preferences of a user.

28. The device having negotiation functions according to claim 25, wherein the attribute information consists of profile information containing the name and location of a user, and preference information containing preferences of the user.

29. The device having negotiation functions according to claim 25, wherein the attribute information consists of the attributes of service or contents subject to the service.

30. The device having negotiation functions according to claim 25, wherein the device having negotiation functions is a terminal used by a user.

31. The device having negotiation functions according to claim 25, wherein the device having negotiation functions is a center device that provides services.

32. A device having negotiation functions, comprising:
a terminal operation control part that controls the functions of the device according to a received terminal operation command;
a first negotiation part that performs negotiation with the transmitting source of the terminal operation command on whether to receive the terminal operation command; and
a filter part that, when receiving the terminal operation command agreed to accept by the first negotiation part, selects the terminal operation command and transfers it to the terminal operation control part.

33. The device having negotiation functions according to claim 32, wherein the device having negotiation functions is a terminal used by a user.

34. A program defining the operation of a computer of a terminal or center device that exchanges attribute information with other devices through a transmission line, the program instructing the computer to execute the steps of:
forming an agreement on conditions for disclosing the attribute information with the other devices according to disclosure conditions set regarding the attribute information; and
forming an agreement on conditions for disclosing the attribute information with the other devices according to receive conditions set regarding the attribute information.

35. A program defining the operation of a computer of a terminal or center device that exchanges contents with other devices through a transmission line, the program instructing the computer to execute the steps of:
forming an agreement on conditions for disclosing the contents with the other devices according to disclosure conditions set regarding the contents; and
forming an agreement on conditions for disclosing the contents with the other devices according to receive conditions set regarding the contents.
